# EUROPEAN PATENT APPLICATION

(11) **EP 4 262 110 A1**
(43) Date of publication of application: **18.10.2023**
(21) Application number: 20967508.1
(22) Date of filing: 30.12.2020
(51) Int. Cl.: H04B 17/00, H04B 7/04, H04W 88/08

(54) **ANTENNA CALIBRATION METHOD AND SYSTEM**

(71) Applicant: Huawei Technologies Co., Ltd., Shenzhen, Guangdong 518129 (CN)
(72) Inventor: YANG, Chaohui, Shenzhen, Guangdong 518129 (CN); CHEN, Cong, Shenzhen, Guangdong 518129 (CN); WANG, Linlin, Shenzhen, Guangdong 518129 (CN); XIAO, Weihong, Shenzhen, Guangdong 518129 (CN)
(74) Representative: Epping - Hermann - Fischer
(86) International application number: PCT/CN2020/141296
(87) International publication number: WO 2022/141165

(57) **Abstract**

Embodiments of this application disclose an antenna calibration method and system, and are applied to the field of communication technologies. The system includes a baseband processing unit, a remote radio unit, an antenna array, and a coupled antenna. The antenna array is configured to send, to a wireless network, a radio frequency calibration signal sent by the baseband processing unit, or receive the radio frequency calibration signal. The remote radio unit is configured to provide a plurality of transmission channels, where the plurality of transmission channels correspond to a plurality of transmission ports. The coupled antenna is configured to receive, in the wireless network, the radio frequency calibration signal sent by the baseband processing unit, and transmit a coupled signal corresponding to the radio frequency calibration signal to the baseband processing unit, or send the radio frequency calibration signal to the wireless network. The baseband processing unit is configured to calibrate, based on a difference between the radio frequency calibration signal and the coupled signal, a plurality of to-be-sent baseband signals corresponding to the plurality of transmission channels.

## Description

### TECHNICAL FIELD

Embodiments of this application relate to the field of communication technologies, and in particular, to an antenna calibration method and system.

### BACKGROUND

With development of communication technologies, a radio frequency system has higher requirements on beamforming accuracy. In addition, in a multi-user multiple-input and multiple-output wireless communication system, each channel needs to be calibrated, to eliminate an impact on a channel caused by a deviation between each radio frequency receive channel and transmit channel, and finally implement consistency of amplitudes and phases of radio frequency transmit channels of a plurality of remote radio units (remote radio units, RRUs). In this way, radio frequency signals transmitted through the plurality of radio frequency transmit channels can be consistent, and transmission performance of the radio frequency signals is improved.

In a conventional technology, antenna calibration is generally performed by using a calibration board. One end of the calibration board is connected to the RRU, and the other end is connected to a radio frequency antenna. The RRU provides a plurality of transmission channels and a calibration channel. In a calibration process, a baseband processing unit (building baseband unit, BBU) sends a calibration sequence to the calibration board through a signal channel in the RRU. After receiving a signal corresponding to the calibration sequence, the calibration board couples the signal, to send the coupled signal back to the BBU through the signal channel in the RRU. Then, the BBU compares the coupled signal and the initial sent signal for a difference, and calibrates each transmission channel based on the difference, to maintain consistency of the transmission channels.

The calibration method needs participation of the calibration board. For example, a plurality of ports of one frequency band share one calibration board, and a plurality of frequency bands need a plurality of calibration boards. Because the calibration board needs to be placed inside an antenna, great difficulties are brought to an internal layout of a radio frequency apparatus. In addition, because the calibration board is installed between the RRU and the radio frequency antenna, a phase difference and an amplitude difference caused by a radiating element in the radio frequency antenna cannot be calibrated. This reduces calibration accuracy. Therefore, how to improve antenna calibration accuracy and simplify a structure of the radio frequency apparatus become problems that need to be urgently resolved.

### SUMMARY

Embodiments of this application provide an antenna calibration system and method, to feed back a coupled signal corresponding to a radio frequency calibration signal to a baseband processing unit by using a coupled antenna, and finally calibrate, based on a difference between the radio frequency calibration signal and the coupled signal, a baseband signal corresponding to each transmission channel. In this way, an antenna calibration process can be completed without designing a calibration board. This simplifies a layout of an antenna system and reduces costs. According to a first aspect, an embodiment of this application provides an antenna calibration system, including: The antenna calibration system includes a baseband processing unit, a remote radio unit, an antenna array, and a coupled antenna. The baseband processing unit is connected to a first end of the remote radio antenna, and the antenna array is connected to a second end of the remote radio unit, to form a serial structure. Then, the coupled antenna is connected to the second end of the remote radio unit. Both the antenna array and the coupled antenna may be configured to send a radio frequency calibration signal to a wireless network, or receive, from the wireless network, a coupled signal corresponding to the radio frequency calibration signal, and transmit the coupled signal to the baseband processing unit. The remote radio unit is a "connection bridge" between the baseband processing unit and an antenna and is configured to provide a plurality of transmission channels. The baseband processing unit sends the radio frequency calibration signal, receives the coupled signal corresponding to the radio frequency calibration signal, compares the radio frequency calibration signal and the coupled signal for a difference, to detect a signal loss caused by different transmission channels, and then calibrates, based on the difference, a to-be-sent radio frequency signal on each transmission channel in advance, to eliminate an impact of the transmission channel on the radio frequency signal.

In the foregoing embodiment, the baseband processing unit sends the radio frequency calibration signal through the transmission channel in the remote radio unit, then couples the radio frequency calibration signal and backhauls the signal to the baseband processing unit. The baseband processing unit may detect the impact of the transmission channel on the radio frequency calibration signal based on transmission of the radio frequency calibration signal. In this way, the baseband processing unit may compensate for the to-be-sent radio frequency signal in advance based on the difference between the initial radio frequency calibration signal and the coupled signal, to reduce the signal loss caused by the transmission channel, ensure consistency of the radio frequency signals transmitted through different channels, and improve transmission performance of the radio frequency signals. In addition, according to the method, signal coupling can be realized without a calibration board. This simplifies a layout of an antenna system and reduces costs.

In an optional implementation, the plurality of transmission channels provided by the remote radio unit may be classified into a plurality of signal transmission channels and at least one calibration channel. Then, the antenna array is connected to the plurality of signal transmission channels, in other words, a plurality of transmission ports corresponding to the antenna array are connected to the plurality of signal transmission channels. The coupled antenna is connected to the calibration channel, in other words, the coupled antenna corresponds to the at least one calibration channel.

In the foregoing embodiment, the antenna array is connected to the signal transmission channels, and the coupled antenna is connected to the calibration channel. In this way, the radio frequency calibration signal may be sent by the antenna array, and the coupled antenna receives the signal and backhauls the signal to the baseband processing unit. Alternatively, the radio frequency calibration signal may be sent by the coupled antenna, and the antenna array receives the signal and backhauls the signal to the baseband processing unit through the signal transmission channels. In this way, for the radio frequency calibration signal, not only downlink signal calibration can be performed, but also uplink signal calibration can be performed, thereby improving calibration performance of the antenna calibration system. In an optional implementation, when the antenna calibration system performs downlink signal calibration, the baseband processing unit sends the radio frequency calibration signal through the signal transmission channels, and then the antenna array transmits the radio frequency calibration signal to the wireless network. The coupled antenna receives the radio frequency calibration signal from the wireless network, couples the radio frequency calibration signal to the calibration channel, and transmits the coupled signal corresponding to the radio frequency calibration signal to the baseband processing unit through the calibration channel.

In this implementation, a transmission direction of the radio frequency calibration signal on the signal transmission channels is consistent with a transmission direction of a downlink signal. In this way, an impact brought by the signal transmission channels on the downlink signal may be detected based on a signal change of the radio frequency calibration signal. Then, the baseband processing unit may compensate for a to-be-sent downlink signal in advance based on the difference between the coupled signal and the radio frequency calibration signal, to improve transmission performance of the downlink signal.

In an optional implementation, when the antenna calibration system performs uplink signal calibration, the baseband processing unit sends the radio frequency calibration signal through the calibration channel, and the coupled antenna transmits the radio frequency calibration signal to the wireless network. Then, the antenna array receives the radio frequency calibration signal from the wireless network, then couples the radio frequency calibration signal to the signal transmission channels, and transmits the coupled signal of the radio frequency calibration signal to the baseband processing unit through the signal transmission channels.

In this implementation, the transmission direction of the radio frequency calibration signal on the signal transmission channels is consistent with a transmission direction of an uplink signal. In this way, an impact brought by the signal transmission channels on the uplink signal may be detected based on a signal change of the radio frequency calibration signal. Then, the baseband processing unit may compensate for a to-be-sent uplink signal in advance based on the difference between the coupled signal and the radio frequency calibration signal, to improve transmission performance of the uplink signal.

In an optional implementation, the antenna calibration system further includes a digital phase shifter. The digital phase shifter is located between the coupled antenna and the calibration channel, the coupled antenna is connected to one end of the digital phase shifter, and a port of the calibration channel is connected to the other end of the digital phase shifter. The digital phase shifter is configured to offset an impact of factors such as a phase shifter in the antenna, and a position distribution of the antenna and the coupled antenna on a phase of the radio frequency calibration signal. In this way, a phase difference between the coupled signal and the radio frequency calibration signal is basically caused by the impact brought by the signal transmission channels. In this way, the to-be-sent radio frequency signal may be calibrated more accurately, and calibration accuracy is improved.

In an optional implementation, a quantity of coupled antennas may be the same as a quantity of calibration channels in the remote radio unit. In this case, each coupled antenna corresponds to a unique calibration channel. When the antenna calibration system is used for downlink signal calibration, each coupled antenna receives the radio frequency calibration signal, and then transmits each coupled signal to the baseband processing unit through the calibration channel.

In an optional implementation, a quantity of coupled antennas may alternatively be greater than a quantity of calibration channels in the remote radio unit. In this case, the antenna calibration system includes a combiner. When the antenna calibration system is used for downlink signal calibration, coupled signals corresponding to the coupled antennas are aggregated by the combiner into one channel of coupled signals, and transmitted to the baseband processing unit through the calibration channel. In this way, a signal-to-noise ratio of the coupled signals can be improved, and calibration accuracy can be improved.

According to a second aspect, an embodiment of this application provides an antenna calibration method, including:
receiving a radio frequency calibration signal from a wireless network by using a coupled antenna, where the radio frequency calibration signal is sent by a baseband processing unit to the wireless network through transmission channels in a remote radio unit;
backhauling a coupled signal corresponding to the radio frequency calibration signal to the baseband processing unit through the transmission channels; and
calibrating a plurality of to-be-sent baseband signals in the baseband processing unit based on a difference between the coupled signal and the radio frequency calibration signal.

In an optional implementation, the transmission channels include a plurality of signal transmission channels and at least one calibration channel, and the coupled antenna is connected to the at least one calibration channel.

In an optional implementation, when the radio frequency calibration signal is sent by the baseband processing unit to the wireless network through the plurality of signal transmission channels, transmitting the coupled signal corresponding to the radio frequency calibration signal to the baseband processing unit through the transmission channels includes: transmitting the coupled signal corresponding to the radio frequency calibration signal to the baseband processing unit through the at least one calibration transmission channel.

In an optional implementation, when the radio frequency calibration signal is sent by the baseband processing unit to the wireless network through the at least one calibration channel, transmitting the coupled signal corresponding to the radio frequency calibration signal to the baseband processing unit through the transmission channels includes: transmitting the coupled signal corresponding to the radio frequency calibration signal to the baseband processing unit through the plurality of transmission channels.

In an optional implementation, the method further includes:
adjusting, based on phase information of the radio frequency calibration signal, a phase of the coupled signal by using a digital phase shifter, where the digital phase shifter is located between the coupled antenna and the at least one calibration channel.

In an optional implementation, the calibrating the plurality of to-be-sent baseband signals in the baseband processing unit includes: calibrating phases and amplitudes of the plurality of to-be-sent baseband signals in the baseband processing unit.

According to a third aspect, this application provides a control device, including at least one processor and a memory. The memory stores computer-executable instructions that can run on the processor. When the computer-executable instructions are executed by the processor, the control device performs the method according to any one of the second aspect or the possible implementations of the second aspect.

According to a fourth aspect, this application provides a chip or a chip system. The chip or the chip system includes at least one processor and a communication interface. The communication interface and the at least one processor are interconnected through a line. The at least one processor is configured to run a computer program or instructions, to perform the antenna calibration method according to any one of the second aspect or the possible implementations of the second aspect.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

According to a fifth aspect, an embodiment of this application provides a computer-readable storage medium. The computer-readable storage medium stores a computer program. When the computer program runs on a computer, the computer is enabled to perform the antenna calibration method according to any one of the second aspect or the possible implementations of the second aspect.

According to a sixth aspect, an embodiment of this application provides a computer program product. The computer program product includes computer software instructions. The computer software instructions may be loaded by a processor to implement a procedure in the antenna calibration method according to any one of the implementations of the second aspect.

It can be learned from the foregoing technical solutions that embodiments of this application have the following advantages:
In the technical solutions provided in embodiments of this application, the baseband processing unit sends the radio frequency calibration signal through the transmission channels in the remote radio unit, then couples the radio frequency calibration signal, and backhauls the signal to the baseband processing unit. In this way, the baseband processing unit may detect the impact of the transmission channels on the radio frequency calibration signal based on the transmission of the radio frequency calibration signal. Then, the baseband processing unit may compensate for the to-be-sent radio frequency signal in advance based on the difference between the initial radio frequency calibration signal and the coupled signal, to reduce the signal loss caused by the transmission channels, ensure the consistency of the radio frequency signals transmitted through different channels, and improve the transmission performance of the radio frequency signal. In addition, according to the method, signal coupling can be realized without the calibration board. This simplifies the layout of the antenna system and reduces the costs.

### BRIEF DESCRIPTION OF DRAWINGS

FIG. 1 is a diagram of a network architecture of an antenna calibration system according to an embodiment of this application;
FIG. 2 is a diagram of an internal structure of a base station antenna according to an embodiment of this application;
FIG. 3 is a diagram of a network architecture of another antenna calibration system according to an embodiment of this application;
FIG. 4 is a schematic flowchart of an antenna calibration method according to an embodiment of this application; and
FIG. 5 is a schematic diagram of a structure of a control device according to an embodiment of this application.

### DESCRIPTION OF EMBODIMENTS

Embodiments of this application provide an antenna calibration system and method, to feed back a coupled signal corresponding to a radio frequency calibration signal to a baseband processing unit by using a coupled antenna, and finally calibrate, based on a difference between the radio frequency calibration signal and the coupled signal, a baseband signal corresponding to each transmission channel. In this way, an antenna calibration process can be completed without designing a calibration board. This simplifies a layout of an antenna system and reduces costs. The following describes in detail the technical solutions in this application with reference to the accompanying drawings in this application. Clearly, the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the data used in such a way are interchangeable in proper circumstances so that embodiments described herein can be implemented in other orders than the order illustrated or described herein. In addition, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

The following clearly and completely describes the technical solutions in embodiments of this application with reference to the accompanying drawings in embodiments of this application.

In the field of mobile communication technologies, to resolve problems of difficult network location selection, inconvenient networking, and high costs, a current wireless communication network mostly uses a multi-channel coverage manner in which a baseband processing unit BBU and a remote radio unit RRU are combined, where the BBU and the RRU are connected through an optical fiber. Each BBU may be connected to a plurality of RRUs. The BBU is configured to process various communication signals, and the RRU is configured to provide a plurality of transmission channels.

Based on the foregoing structure, when a base station sends a downlink signal, because the BBU is directly connected to the RRU through the optical fiber, the base station may control the downlink signal to be transmitted from a particular RRU channel. When the base station receives an uplink signal, the uplink signal sent by a sender is received by a nearest RRU channel, and then may be transmitted to the BBU through an independent RRU channel. In this way, interference caused by another signal to the uplink signal may be greatly reduced.

The other end of the RRU is connected to an antenna, and the antenna is configured to radiate the downlink signal to the wireless communication network or receive the uplink signal from the wireless communication network. With development of 5G technologies, a 5G base station can support a large-scale antenna array, and use beamforming technologies to improve transmission quality of radio signals in space. To improve beamforming accuracy, errors caused by characteristics of a plurality of RRU channels need to be within an accuracy scope. Therefore, a manner of periodic calibration may be used to reduce the errors caused by different RRU channels.

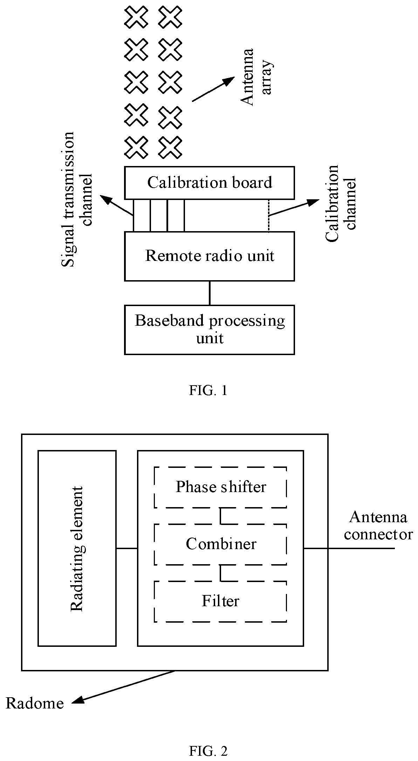

FIG. 1 is a diagram of a network architecture of an antenna calibration system according to an embodiment of this application. As shown in FIG. 1, the antenna calibration system includes a BBU, an RRU, a calibration board, and an antenna array. The BBU and the RRU are connected through an optical fiber, and the other end of the RRU is connected to the antenna array. The calibration board (coupling board) exists between the RRU and the antenna array, and is configured to couple a radio frequency signal to the BBU. Transmission channels in the RRU are classified into a signal transmission channel and a calibration channel.

When the antenna calibration system performs downlink signal calibration, the BBU sends a downlink calibration sequence (radio frequency calibration signal) to the RRU, then transmits the downlink calibration sequence to the calibration board through the signal transmission channel in the RRU. The downlink calibration sequence obtained through coupling by the calibration board is backhauled to a baseband through the calibration channel. The baseband compares the initial downlink calibration sequence and the backhauled calibration sequence (coupled signal), to learn of signal phase and amplitude changes caused by the signal transmission channel. Finally, the baseband obtains a change corresponding to each signal receiving channel, to compensate for a to-be-transmitted radio frequency signal corresponding to each signal transmission channel, to calibrate each signal receiving channel.

For example, the RRU includes three signal transmission channels. When sending a downlink calibration sequence to a signal transmission channel 1 to finally obtain a coupled sequence corresponding to the downlink calibration sequence, the BBU learns, by comparing a difference between the downlink calibration sequence and the coupled sequence, that the signal transmission channel 1 causes a phase offset of the downlink calibration sequence by 20 degrees. In this case, when the BBU sends a baseband signal through the signal transmission channel 1, a phase of the baseband signal needs to be adjusted by 20 degrees, to reduce a phase error caused by the signal transmission channel 1 to the baseband signal.

When the antenna calibration system performs uplink signal calibration, the BBU sends an uplink calibration sequence (radio frequency calibration signal) to the RRU, then transmits the uplink calibration sequence to the calibration board through the calibration channel in the RRU. The uplink calibration sequence obtained through coupling by the calibration board is backhauled to the baseband through the signal transmission channel. The baseband compares the initial uplink calibration sequence and the backhauled calibration sequence (coupled signal), to learn of signal phase and amplitude changes caused by the signal transmission channel. Finally, the baseband obtains a change corresponding to each signal receiving channel, to compensate for a radio frequency signal received by each signal transmission channel. It may be understood that a principle of an uplink signal calibration process is similar to that of a downlink signal calibration process, except that a direction of a calibration sequence in the signal transmission channel is changed. Details are not described herein.

As shown in the preceding figure, a calibration process of the antenna calibration system is mainly based on a coupling function of the calibration board, and calibration accuracy depends on accuracy of the calibration board. In an application scenario of complex multi-band antennas, a large quantity of calibration boards are needed, so that a component layout inside the system is extremely difficult and costs are high. In addition, because the calibration board is located between the RRU and the antenna, the calibration sequence is coupled and backhauled to the BBU before being transmitted to the antenna. Therefore, the calibration board cannot calibrate a phase error caused by the antenna, resulting in low calibration accuracy.

Based on the foregoing problem, an embodiment of this application provides a new antenna calibration system. A calibration antenna is added to replace the calibration board to backhaul the coupled signal, to reduce a difficulty in the component layout inside the system. In addition, a phase offset error caused by an antenna can be calibrated, so that calibration performance of the antenna calibration system is improved, and transmission performance of a radio frequency signal is further improved.

This embodiment of this application is applied to a base station antenna feeder system. The base station antenna feeder system is a system including a base station antenna, a feeder, a pole, and an antenna adjustment support. Specifically, FIG. 2 is a diagram of an internal structure of a base station antenna according to an embodiment of this application. As shown in FIG. 2, the base station antenna generally includes a radiating element, a feed network, and a radome.

The radiating element may alternatively be referred to as an antenna element, an element, or the like. The radiating element is a basic unit that forms an antenna array, and can effectively radiate a radio wave (radio signal) outward or receive a radio wave (radio signal) inward.

The feed network is a structure that feeds a baseband signal to the radiating element based on a specific amplitude and phase, or sends a received radio signal to a base station signal processing unit based on a specific amplitude and phase. The feed network usually includes controlled impedance transmission lines, and includes components such as a phase shifter, a combiner, and a filter. A radio frequency system may control the phase shifter in the antenna array to perform phase adjustment on a baseband signal corresponding to each antenna, and finally control a downtilt of an entire radio frequency network.

The radome is configured to protect components inside the antenna from an external environment. To improve transmission performance of a radio signal, the radome generally has good electromagnetic wave penetrability and good mechanical performance.

It may be understood that, the antenna may further include another component, for example, a reflection plate, configured to improve receiver sensitivity for an antenna signal, and reflect and aggregate the antenna signal onto a receiving point. This can not only greatly enhance a receiving/transmitting capability of the antenna, but also block and shield an interference of another radio wave from the back (an opposite direction) to a received signal.

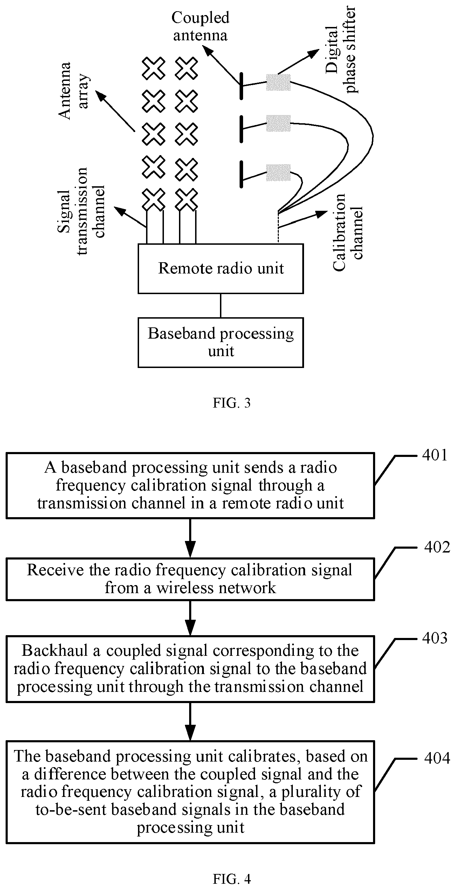

FIG. 3 is a diagram of a network architecture of another antenna calibration system according to an embodiment of this application. As shown in FIG. 3, a coupled antenna is used to replace a calibration board in the antenna calibration system, and the antenna calibration system includes a BBU, an RRU, an antenna array, and the coupled antenna. The BBU and the RRU are connected through an optical fiber, and the other end of the RRU is connected to the antenna array. The coupled antenna is also connected to the RRU through an optical fiber.

Transmission channels in the RRU are classified into a signal transmission channel and a calibration channel. The antenna array is connected to the signal transmission channel in the RRU, and the coupled antenna is connected to the calibration channel.

In an optional embodiment, a quantity of antenna arrays is the same as a quantity of signal transmission channels. For example, one row of antennas with a same polarization direction corresponds to one signal transmission channel. For example, there are four rows of antennas in FIG. 3, and the four rows of antennas respectively correspond to four signal transmission channels in the RRU. Polarization directions of antennas in the first row and antennas in the third row are the same, and polarization directions of antennas in the second row and antennas in the fourth row are the same. Each row of antennas corresponds to one signal transmission interface, to receive or send a radio frequency signal.

The RRU further includes at least one calibration channel, and a quantity of coupled antennas is not limited herein. For example, a quantity of calibration channels may be the same as a quantity of coupled antennas. In this case, each coupled antenna may be connected to one of the calibration channels, that is, the coupled antennas are in a one-to-one correspondence with the calibration channels. For example, there may be a plurality of coupled antennas, and the RRU includes only one calibration channel. In this case, the plurality of coupled antennas may be connected to the calibration channel by using a combiner. To be specific, the coupled antennas may be in a one-to-one correspondence with the calibration channels or a many-to-one correspondence with the calibration channel. This is not specifically limited. It may be understood that the plurality of coupled antennas are configured to receive radio frequency calibration signals, and then a plurality of radio frequency calibration signals are coupled into one channel of signals and then coupled back to the calibration channel, so that a signal-to-noise ratio of the signals can be improved, and calibration accuracy can be improved.

In an optional implementation, a digital phase shifter may be further included between the coupled antenna and the calibration channel. The digital phase shifter is configured to offset an impact of a phase shifter in the antenna on calibration. The phase shifter in the antenna is configured to change a downtilt of a radio frequency system, but not to change a phase error offset caused by a transmission channel in the radio frequency system. Therefore, an effect of the phase shifter on a phase needs to be excluded during calibration, so that a baseband signal can be calibrated more accurately.

The coupled antennas may be arranged along a vertical plane, and phase compensation of the digital phase shifter connected to the coupled antenna relates to a position of the coupled antenna. For example, as shown in FIG. 3, for a column of antennas arranged along the vertical plane, an arrangement position of the coupled antenna determines strength of a received radio frequency signal sent by an antenna. For example, a coupled antenna P3 is closest to an antenna X in the first column of antennas. In this case, a phase shift degree of a phase shifter corresponding to the antenna X has a greatest impact on a phase shift degree of a digital phase shifter connected to P3. For example, when a phase shift degree corresponding to a radio frequency signal received by the antenna X is a1, the phase shift degree of the digital phase shifter connected to 3 is -al.

It may be understood that each column of antennas may correspond to a coupled antenna, or all antennas may share a coupled antenna, and this is not limited herein. A preferred implementation may be that an antenna array corresponding to every two output transmission ports corresponds to one group of coupled antennas.

Based on the foregoing antenna calibration system, when the antenna calibration system performs downlink signal calibration, the BBU sends a downlink calibration sequence (radio frequency calibration signal) to the RRU, the downlink calibration sequence is transmitted, through a signal transmission channel in the RRU, to an antenna array corresponding to the transmission channel, and then the downlink calibration sequence is radiated, through a signal transmission port corresponding to the antenna array, to a wireless communication network. Then, the coupled antenna receives the downlink calibration sequence from the wireless communication network, performs phase adjustment on the received downlink calibration sequence, and backhauls the received downlink calibration sequence to the baseband processing unit through the calibration channel. The baseband processing unit compares the initial downlink calibration sequence and the backhauled calibration sequence (coupled signal), to learn of signal phase and amplitude changes caused by the signal transmission channel. Finally, the baseband processing unit obtains a change corresponding to each signal receiving channel, to compensate for a to-be-transmitted radio frequency signal corresponding to each signal transmission channel, to calibrate each signal receiving channel.

When the antenna calibration system performs uplink signal calibration, the BBU sends an uplink calibration sequence to the RRU, and the uplink calibration sequence is transmitted, through the calibration channel in the RRU, to a digital phase shifter. The digital phase shifter first performs phase compensation on the uplink calibration sequence in advance, to offset a phase shift of the uplink calibration sequence performed by a phase shifter corresponding to an antenna, and then a phase-compensated signal is sent to a radio access network by using a coupled antenna. Then, the antenna receives the downlink calibration sequence from the radio access network, and backhauls the downlink calibration sequence to the baseband processing unit through a signal transmission channel. The baseband processing unit compares the initial uplink calibration sequence and the backhauled calibration sequence (coupled signal), to learn of signal phase and amplitude changes caused by the signal transmission channel. Finally, the baseband processing unit obtains a change corresponding to each signal receiving channel, to compensate for a radio frequency signal received by each signal transmission channel. It may be understood that a principle of an uplink signal calibration process is similar to that of a downlink signal calibration process, except that a direction of a calibration sequence in the signal transmission channel is changed. Details are not described herein.

FIG. 4 is a schematic flowchart of an antenna calibration method according to an embodiment of this application. As shown in FIG. 4, the antenna calibration method includes:
401: A baseband processing unit sends a radio frequency calibration signal through a transmission channel in the remote radio unit.

In an antenna calibration system, the baseband processing unit is connected to one end of the remote radio unit, and an antenna array and a coupled antenna are respectively connected to the other end of the remote radio unit. The baseband processing unit is configured to process a radio frequency signal, the antenna array and the coupled antenna are configured to send or receive the radio frequency signal, and the remote radio unit is configured to provide transmission channels.

For example, the transmission channels provided by the remote radio unit may include a plurality of signal transmission channels and at least one calibration channel, where the signal transmission channels are used to connect to the antenna array, and the calibration signal is used to connect to the coupled antenna. When downlink signal calibration is performed, the baseband processing unit sends the radio frequency calibration signal through the signal transmission channels and the antenna array. When uplink signal calibration is performed, the baseband processing unit sends the radio frequency calibration signal to a wireless network through the calibration channel and the coupled antenna.

402: Receive the radio frequency calibration signal from the wireless network.

When antenna calibration is performed, the sent radio frequency calibration signal needs to be coupled to the baseband processing unit. It may be understood that, when downlink signal calibration is performed, the baseband processing unit sends the radio frequency calibration signal to the wireless network through the signal transmission channels and the antenna array, and then the coupled antenna receives the radio frequency calibration signal from the wireless network. When uplink signal calibration is performed, the baseband processing unit sends the radio frequency calibration signal to the wireless network through the calibration channel and the coupled antenna, and then the antenna array receives the radio frequency calibration signal from the wireless network.

403: Backhaul a coupled signal corresponding to the radio frequency calibration signal to the baseband processing unit through the transmission channel.

After the radio frequency calibration signal in the wireless network is received, the coupled signal corresponding to the radio frequency calibration signal needs to be backhauled to the baseband processing unit through the transmission channel. It may be understood that a digital phase shifter further exists between the coupled antenna and the calibration channel. The digital phase shifter is configured to pre-compensate for a phase of the radio frequency calibration signal, or adjust a phase of the coupled signal. The objective is to eliminate an impact of a position of the antenna or the coupled antenna on the phase of the radio frequency calibration signal. In this way, a phase change of the coupled signal mainly depends on the signal transmission channel, and calibration accuracy is improved.

404: The baseband processing unit calibrates a plurality of to-be-sent baseband signals in the baseband processing unit based on a difference between the coupled signal and the radio frequency calibration signal.

The baseband processing unit compares the difference between the initial radio frequency calibration signal and the backhauled coupled signal, to learn of signal phase and amplitude changes caused by the signal transmission channel. Finally, the baseband processing unit obtains a change corresponding to each signal receiving channel, to compensate for a to-be-transmitted radio frequency signal corresponding to each signal transmission channel, to calibrate each signal receiving channel.

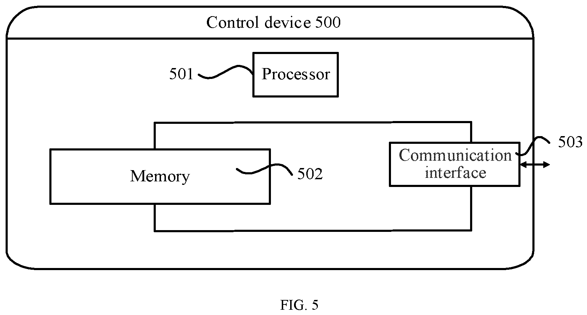

FIG. 5 is a schematic diagram of a structure of a control device 500 according to an embodiment of this application. The control device 500 includes a processor 501, a memory 502, and a communication interface 503.

The processor 501, the memory 502, and the communication interface 503 are mutually connected through a bus. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 5, but this does not mean that there is only one bus or only one type of bus.

The memory 502 may include a volatile memory (volatile memory), for example, a random access memory (random access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory 502 may alternatively include a combination of the foregoing types of memories.

The processor 501 may be a central processing unit (central processing unit, CPU), a network processor (English: network processor, NP), or a combination of a CPU and an NP. The processor 501 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The communication interface 503 may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be a WLAN interface, a cellular network communication interface, a combination thereof, or the like. The processor 501 is configured to run a computer program or instructions in the memory 502, to perform the steps of the antenna calibration method according to any possible implementation of the embodiment shown in FIG. 4. The processor 501 is configured to run the computer program or the instructions in the memory 502, to perform the steps performed by a target end according to any possible implementation of the embodiment shown in FIG. 1.

An embodiment of this application further provides a chip or a chip system. The chip or the chip system includes at least one processor and a communication interface. The communication interface and the at least one processor are interconnected through a line. The at least one processor is configured to run a computer program or instructions, to perform the antenna calibration method according to any one of the possible implementations of the embodiment shown in FIG. 5.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

An embodiment of this application further provides a computer storage medium. The computer storage medium is configured to store computer software instructions used by the foregoing control device, and the computer software instructions include a program designed for executing the control device.

An embodiment of this application further provides a computer program product. The computer program product includes computer software instructions. The computer software instructions may be loaded by a processor to implement a procedure in the antenna calibration method.

All or some of the foregoing embodiments may be implemented by using software, hardware, firmware, or any combination thereof. When the software is used to implement the embodiments, all or some of the embodiments may be implemented in a form of a computer program product.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

## Claims

1. An antenna calibration system, wherein the antenna calibration system comprises a baseband processing unit, a remote radio unit, an antenna array, and a coupled antenna, wherein
the baseband processing unit is connected to a first end of the remote radio unit, and the antenna array and the coupled antenna are respectively connected to a second end of the remote radio unit;
the antenna array is configured to send, to a wireless network, a radio frequency calibration signal sent by the baseband processing unit, or
receive the radio frequency calibration signal, and transmit a coupled signal corresponding to the radio frequency calibration signal to the baseband processing unit, wherein the antenna array comprises a plurality of transmission ports;
the remote radio unit is configured to provide a plurality of transmission channels, wherein the plurality of transmission channels correspond to the plurality of transmission ports;
the coupled antenna is configured to receive, in the wireless network, the radio frequency calibration signal sent by the baseband processing unit, and transmit the coupled signal corresponding to the radio frequency calibration signal to the baseband processing unit, or
send the radio frequency calibration signal to the wireless network; and
the baseband processing unit is configured to calibrate, based on a difference between the radio frequency calibration signal and the coupled signal, a plurality of to-be-sent baseband signals corresponding to the plurality of transmission channels.

2. The antenna calibration system according to claim 1, wherein the plurality of transmission channels comprise a plurality of signal transmission channels and at least one calibration channel, wherein the plurality of transmission ports correspond to the plurality of signal transmission channels, and the coupled antenna corresponds to the at least one calibration channel.

3. The antenna calibration system according to claim 2, wherein when the antenna calibration system is used for downlink signal calibration, the baseband processing unit is configured to send the radio frequency calibration signal through the plurality of signal transmission channels; and
the coupled antenna is configured to couple the radio frequency calibration signal to the calibration channel, and transmit the coupled signal of the radio frequency calibration signal to the baseband processing unit through the calibration channel.

4. The antenna calibration system according to claim 2, wherein when the antenna calibration system is used for uplink signal calibration, the baseband processing unit is configured to send the radio frequency calibration signal through the calibration channel; and
the coupled antenna is configured to couple the radio frequency calibration signal to the signal transmission channel, and transmit the coupled signal of the radio frequency calibration signal to the baseband processing unit through the signal transmission channel.

5. The antenna calibration system according to any one of claims 2 to 4, wherein the antenna calibration system further comprises a digital phase shifter, and the coupled antenna is connected to a calibration port by using the digital phase shifter.

6. The antenna calibration system according to claim 5, wherein a quantity of coupled antennas is equal to a quantity of calibration channels; and
when the antenna calibration system is used for downlink signal calibration, each coupled signal corresponding to each coupled antenna is transmitted to the baseband processing unit through one calibration channel.

7. The antenna calibration system according to claim 5, wherein the antenna calibration system further comprises a combiner, a quantity of coupled antennas is greater than a quantity of calibration channels, and the antenna calibration system comprises one calibration channel; and
when the antenna calibration system is used for downlink signal calibration, coupled signals corresponding to the coupled antennas are aggregated by the combiner into one channel of coupled signals, and transmitted to the baseband processing unit through the calibration channel.

8. An antenna calibration method, wherein the method comprises:
receiving a radio frequency calibration signal from a wireless network by using a coupled antenna, wherein the radio frequency calibration signal is sent by a baseband processing unit to the wireless network through transmission channels in a remote radio unit;
backhauling a coupled signal corresponding to the radio frequency calibration signal to the baseband processing unit through the transmission channels; and
calibrating a plurality of to-be-sent baseband signals in the baseband processing unit based on a difference between the coupled signal and the radio frequency calibration signal.

9. The method according to claim 8, wherein the transmission channels comprise a plurality of signal transmission channels and at least one calibration channel, and the coupled antenna is connected to the at least one calibration channel.

10. The method according to claim 9, wherein when the radio frequency calibration signal is sent by the baseband processing unit to the wireless network through the plurality of signal transmission channels, transmitting the coupled signal corresponding to the radio frequency calibration signal to the baseband processing unit through the transmission channels comprises:
transmitting the coupled signal corresponding to the radio frequency calibration signal to the baseband processing unit through the at least one calibration transmission channel.

11. The method according to claim 9, wherein when the radio frequency calibration signal is sent by the baseband processing unit to the wireless network through the at least one calibration channel, transmitting the coupled signal corresponding to the radio frequency calibration signal to the baseband processing unit through the transmission channels comprises:
transmitting the coupled signal corresponding to the radio frequency calibration signal to the baseband processing unit through the plurality of transmission channels.

12. The method according to either of claims 10 and 11, wherein the method further comprises:
adjusting, based on phase information of the radio frequency calibration signal, a phase of the coupled signal by using a digital phase shifter, wherein the digital phase shifter is located between the coupled antenna and the at least one calibration channel.

13. The method according to any one of claims 8 to 12, wherein the calibrating a plurality of to-be-sent baseband signals in the baseband processing unit comprises:
calibrating phases and amplitudes of the plurality of to-be-sent baseband signals in the baseband processing unit.

14. A computer-readable storage medium storing one or more computer-executable instructions, wherein when the computer-executable instructions are executed by a processor, the processor performs the method according to any one of claims 8 to 13.
